(19) Europäisches Patentamt
European Patent Office
Office européen des brevets

(11) **EP 2 706 351 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
*G01B 7/06* *(2006.01)*    *G01N 27/72* *(2006.01)*

(21) Anmeldenummer: **13182047.4**

(22) Anmeldetag: **28.08.2013**

(54) **Verfahren, Vorrichtung und Verwendung der Vorrichtung zur zerstörungsfreien quantitativen Bestimmung von Schichtdicken eines Schichten aufweisenden Körpers**

Method, device and use of the device for non-destructive quantitative determination of layer thicknesses of a body with layers

Procédé, dispositif et utilisation du dispositif pour la détermination quantitative non destructive de l'épaisseur de couche d'un corps présentant des couches

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2012 DE 102012017784**

(43) Veröffentlichungstag der Anmeldung:
**12.03.2014 Patentblatt 2014/11**

(73) Patentinhaber: **Fraunhofer-Gesellschaft zur Förderung der angewandten Forschung e.V.**
**80686 München (DE)**

(72) Erfinder:
• **Kern, Rolf**
**66571 Eppelborn-Dirmingen (DE)**
• **Kop, Harald**
**66646 Marpingen (DE)**
• **Conrad, Christian**
**66740 Saarlouis (DE)**
• **Wolter, Bernd**
**66399 Mandelbachtal (DE)**

(56) Entgegenhaltungen:
**EP-A1- 0 100 009        EP-A1- 1 767 932**
**WO-A1-87/00293        WO-A1-87/05112**
**WO-A1-2004/021024    DE-A1- 4 433 772**
**US-B1- 6 201 391**

• **PTCHELINTSEV A ET AL: "Thickness and conductivity determination of thin nonmagnetic coatings on ferromagnetic conductive substrates using surface coils", REVIEW OF SCIENTIFIC INSTRUMENTS, AIP, MELVILLE, NY, US, Bd. 69, Nr. 3, März 1998 (1998-03), Seiten 1488-1494, XP012036480, ISSN: 0034-6748, DOI: 10.1063/1.1148784**

**Beschreibung**

Die Erfindung betrifft eine Vorrichtung und ein Verfahren zur zerstörungsfreien quantitativen Bestimmung der Schichtdicken eines zumindest zwei Schichten unterschiedlicher Stoffzusammensetzung aufweisenden Prüfkörpers durch Oberwellenanalyse im Zeitsignal der tangentialen Magnetfeldstärke und Messung der Überlagerungspermeabilität in Abhängigkeit von der magnetischen Flussdichte sowie Auswertung durch einen Schätzer. Des Weiteren betrifft die Erfindung die Verwendung der erfindungsgemäßen Vorrichtung zur Schichtdickenbestimmung an einem Prüfkörper, der zumindest eine para- und/oder eine diamagnetische Schicht aufweist.

Stand der Technik

Eigenschaften von Bauteilen werden oft durch Funktions- und Schutzschichten an eine gegebene Anwendung angepasst. Ein Bauteil kann von Anfang an einen Schichtaufbau aufweisen oder Schichten werden im Nachhinein aufgebracht. Auch können sich der Schichtenaufbau, die Stoffzusammensetzung und Schichtabmessungen durch Prozessieren, beispielsweise Wärmebehandeln oder mechanische Verarbeitung verändern. So können ausgehend von der Grenzfläche zweier Schichten neue Schichten entstehen. Neben der Stoffzusammensetzung sind die geometrischen Größen von Bedeutung, das heißt die Schichtenfolge und Schichtdicken.

Da die Bauteileigenschaften teilweise empfindlich vom Schichtaufbau abhängen, haben Prüfverfahren und Prüfmittel zur Messung der Schichten große Bedeutung.

Bekannt sind Prüfverfahren für metallische Bauteile, bei denen durch einen Schliff und optische Vermessung stichprobenartig Bauteile zerstörend metallographisch in ihrem Schichtaufbau untersucht werden. Von Natur aus erlaubt die zerstörende Prüfung nicht, ein im Weiteren zu nutzendes Bauteil selbst zu prüfen. Vielmehr wird das eine Bauteil zerstört, um auf die Eigenschaften eines anderen Bauteils zu schließen.

Bekannt sind auch nicht-zerstörende Prüfverfahren zur Bestimmung des Schichtaufbaus eines Bauteils. So lassen sich Bauteile, die leitende Schichten enthalten durch Wirbelstrommessung zerstörungsfrei prüfen. Weitere Verfahren beruhen auf Ultraschall, magnetischem oder akustischem Barkhausenrauschen usw. Zerstörungsfreie Prüfverfahren weisen eine Reihe von Vorteilen auf. So ist die Messung der interessierenden Größen am auszuliefernden Bauteil selbst möglich. Gewöhnlich ist die Messzeit kürzer als bei einer zerstörenden Prüfung. So können durch ein genaues und schnelles Prüfverfahren Prozessparameter und damit vollständige Herstellungsprozesse in Echtzeit geregelt werden.

Jedoch sind in der Praxis nur wenige zerstörungsfreie Prüfverfahren bekannt, die in der Genauigkeit einem zerstörenden Prüfverfahren ebenbürtig sind.

Eine Untergruppe zerstörungsfreier Prüfverfahren für metallische Bauteile nutzt die magnetischen und elektrischen Eigenschaften eines zu prüfenden Bauteils. So ist aus DE 10 2005 046 574 A1 ein Prüfgerät und -verfahren bekannt, dass zur Werkstoffprüfung eine Barkhausenrausch-, Oberwellen-, Wirbelstrom- und/oder Überlagerungspermeabilitätsanalyse bei einstellbaren Magnetisierungsfrequenzen und Magnetfeldamplituden einsetzt und aus den gewonnenen Werten die Werkstoffzusammensetzung, Eigenspannung und auch Werkstofffehler an Bauteilen im oberflächennahen Bereich bestimmen kann. Das in der Schrift beschriebene Prüfgerät und offenbarte Prüfverfahren ist jedoch nicht zur Bestimmung von Schichtdicken geeignet und stellt nur auf die Prüfung eines oberflächennahen Bereichs eines Bauteils ab. Außerdem lassen sich unmagnetische Schichten durch die offenbarte Lehre nicht vermessen.

Aus US 7,259,555 B2 sind ein Verfahren und eine Vorrichtung zur Bestimmung der Härtungstiefe unter Nutzung eines Barkhausenrauschsensors an einem Prüfobjekt bekannt. Beim Prüfobjekt handelt es sich um einen vollständig ferromagnetischen und dabei zumindest zwei Schichten aufweisenden Prüfkörper. Das offenbarte Verfahren erlaubt die Bestimmung der Schichtdicke einer gehärteten Schicht, ist jedoch auf den Einsatz an vollständig ferromagnetischen Prüfobjekten beschränkt. Die Prüfung von Schichten unterschiedlicher Stoffzusammensetzung wird durch die offenbarte Lehre nicht abgedeckt.

Aus DE 4119903 A1 ist ein magnetinduktives Messverfahren zur Bestimmung der Dicke dünner Schichten bekannt, gemäß welchem die angezeigte Schichtdicke von der Form des Messgegenstandes nahezu unabhängig ist und welches zur Messung von nichtmagnetischen oder elektrisch nicht leitenden Schichten auf magnetischem Grundwerkstoff eingesetzt werden kann. Insbesondere bei dünnen Schichten ist die Messgenauigkeit des offenbarten Messverfahrens jedoch begrenzt.

EP 0 100 009 A1 offenbart ein Verfahren zur Bestimmung der Schichtdicke einer gehärteten Schicht auf Basis der Analyse des Barkhausenrauschens oder der Überlagerungspermeabilität. Der Prüfkörper besteht aus einem einzigen Stoff, die Oberflächenschicht ist durch einen Härtesprung abgegrenzt. Grundlage des Messverfahrens ist die frequenzabhängige Eindringtiefe des Magnetfeldes einer Wirbelstromsensorspule. Das Verfahren setzt jedoch eine konstante Leitfähigkeit über alle Schichten voraus. Bei einem Prüfkörper mit Schichten unterschiedlicher Stoffzusammensetzung wird diese Voraussetzung nicht erfüllt.

WO 87/00293 A1 offenbart eine Lehre zur Bestimmung der Volumenkonzentration einer ferritischen Phase eines aus einer Eisen-Kohlenstoff-Legierung bestehenden Prüfkörpers. Eine Lehre zur Bestimmung der Schichtdicken an Prüfkörpern, wenn die Schichten eine unterschiedliche Stoffzusammensetzung aufweisen ist nicht offenbart.

DE 44 33 772 A1 offenbart die Nutzung eines neuronalen Netzes zur Auswertung der Messsignale eines Wirbelstromsensors, sodass Benutzer ohne Kenntnis der mathematischen Hintergründe weitestgehend materialunabhängige Messungen durchführen kann. Aus der Schrift geht jedoch nicht hervor, wie insbesondere Schichtdicken dünner Schichten unterschiedlicher Materialzusammensetzung gemessen werden können.

EP 1 767 932 A1 offenbart eine Vorrichtung zur Oberwellenanalyse des Zeitsignals der tangentialen Magnetfeldstärke und eine Überlagerungspermeabilitätsanalyse in einem Aufbau. Es lassen sich so Werkstoffzusammensetzungen, Eigenspannungen und auch Werkstofffehler an Bauteilen im oberflächennahen Bereich detektieren, jedoch nicht die Eigenschaften von Schichten eines unterschiedliche Stoffzusammensetzung aufweisen Prüfkörpers bestimmen.

Auch die Lehre aus WO 87/05112 A1 erlaubt die Materialanalyse eines aus einem diamagnetischen, paramagnetischen, ferromagnetischen oder ferrimagnetsichen Material aufgebauten Prüfkörpers, nicht jedoch eines aus Schichten unterschiedlicher Stoffzusammensetzung aufgebauten Prüfkörpers.

Die aus dem Stand der Technik bekannten zerstörungsfreien magnetischen Prüfverfahren und -vorrichtungen sind nicht geeignet, Schichtdicken an Prüfkörpern mit hoher Genauigkeit bei dünnen Schichten zu bestimmen, wenn die Schichten eine unterschiedliche Stoffzusammensetzung aufweisen.

Darstellung der Erfindung

Der Erfindung liegt die Aufgabe zugrunde, ein Verfahren und eine Vorrichtung bereitzustellen, die die Schichtdicken eines zumindest zwei Schichten unterschiedlicher Materialzusammensetzung aufweisenden Prüfkörpers mit hoher Genauigkeit und kurzer Messdauer auch bei dünnen Schichten bestimmt. Die Erfindung betrifft weiterhin die Verwendung der erfindungsgemäßen Vorrichtung auf einen Prüfkörper mit zumindest einer para- oder diamagnetischen Schicht.

Die erfindungsgemäße Aufgabe wird durch ein Verfahren nach Anspruch 1, eine Vorrichtung nach Anspruch 11 und die Verwendung der Vorrichtung nach Anspruch 13 gelöst. Den Erfindungsgedanken vorteilhaft weiterbildende Merkmale sind Gegenstand der Unteransprüche sowie der Beschreibung, insbesondere unter Bezugnahme auf die Ausführungsbeispiele.

Das erfindungsgemäße Verfahren dient der Schichtdickenbestimmung an einem aus mindestens zwei Schichten aufgebauten Prüfkörper mit einer äußeren Deckschicht und einer in Bezug auf die Deckschicht tiefer im Prüfkörper angeordneten Basisschicht, wobei die Schichten unterschiedliche magnetische Eigenschaften und Stoffzusammensetzung aufweisen.

Zur Schichtdickenbestimmung wird der Prüfkörper einem magnetischen Wechselfeld ausgesetzt und die magnetische Feldstärke an oder nahe der Oberfläche gemessen. Die Messung der magnetischen Feldstärke ermöglicht die Regelung der magnetischen Feldstärke des magnetischen Wechselfeldes.

Es wird zumindest ein, vorzugsweise eine Vielzahl von Wertepaaren des Oberwellengehalts des Zeitsignals der tangentialen Magnetfeldstärke in Abhängigkeit von der magnetischen Feldstärke gemessen. Ein Wertepaar setzt sich aus dem Messwert des Oberwellengehalts des Zeitsignals und dem Messwert der magnetischen Feldstärke zusammen.

Es wird zumindest ein, vorzugsweise eine Vielzahl von Wertepaaren der Überlagerungspermeabilität in Abhängigkeit von der magnetischen Feldstärke gemessen. Ein Wertepaar setzt sich aus dem Messwert der Überlagerungspermeabilität und dem Messwert der magnetischen Feldstärke zusammen.

Aus den gemessenen Wertepaaren wird mittels eines statistischen Analyseverfahrens die Schichtdicke der Deckschicht und/oder weiterer Schichten im Prüfkörper bestimmt.

Das magnetische Wechselfeld kann zur Messung der Wertepaare des Oberwellengehalts des Zeitsignals und der Überlagerungspermeabilität mehrere Frequenzkomponenten enthalten. Insbesondere eine quasistatische Komponente mit großer Amplitude und eine höherfrequente Komponente mit kleinerer Amplitude.

Durch die Anwendung eines statistischen Analyseverfahrens auf die Messwerte des Oberwellengehalts des Zeitsignals der tangentialen Magnetfeldstärke in Abhängigkeit von der magnetischen Feldstärke und die Messwerte der Überlagerungspermeabilität in Abhängigkeit von der magnetischen Feldstärke können die Schichtdicken mit hoher Bestimmtheit und geringer Standardabweichung bestimmt werden. Das statistische Analyseverfahren kann schnell an veränderte Messbedingungen und Prüfkörper angepasst werden. Das statistische Analyseverfahren ist ein Modell, mit dem die Messwerte und/oder daraus abgeleitete Größen als Eingangsgrößen auf die Zielgrößen, die zu messenden Schichtdicken, abgebildet werden.

Vorteilhaft wird das statistische Analyseverfahren an einem sogenannten Kalibrierkörper kalibriert, wobei der Kalibrierkörper eine bekannte Schichtenfolge und bekannte Schichtdicken aufweist. Kalibrieren heißt, dass die Parameter des statistischen Analyseverfahrens, die Modellparameter justiert werden, um den Fehler der Schichtdickenbestimmung im vorgegebenen Messbereich zu minimieren. Zur Justage können verschiedene Methoden angewendet werden, wie beispielsweise die Methode der kleinsten Quadrate, bei der die Modellparameter so eingestellt werden, dass die Summe der Quadrate der Abweichungen zwischen Ausgangswert des Modells und der zugehörigen bekannten Schichtdicke minimal ist.

Vorzugsweise wird das statistische Analyseverfahren an mehreren Kalibrierkörpern kalibriert, die verschiedene, aber bekannte Schichtenfolgen und/oder Schichtdicken aufweisen.

Unter anderem zur Verbesserung der Genauigkeit können zusätzlich bekannte Werte von Materialkennwerten wie Härte, Streckgrenze, Zugfestigkeit, Bruchdehnung und/oder Gleichmaßdehnung in das statistische Analyseverfahren einfließen.

Auch können zur Verbesserung der Genauigkeit Messwerte des magnetischen und/oder akustischen Barkhausenrauschens in Abhängigkeit von der magnetischen Feldstärke in das statistische Analyseverfahren einfließen.

Die Messwerte, Wertepaare aus einer Messung des Oberwellengehalts des Zeitsignals der tangentialen Magnetfeldstärke und der Messung der Überlagerungspermeabilität jeweils in Abhängigkeit von der magnetischen Feldstärke bilden Wertepaarfolgen, die bei genügend hoher Anzahl von Wertepaaren die Bestimmung charakteristischer Kenngrößen, wie lokaler und globaler Extremwerte, Symmetrien, Halbwertsbreiten erlauben. Weitere charakteristische Kenngrößen sind aus dem Bereich der Kurvendiskussion bekannt. Die charakteristischen Kenngrößen werden im Weiteren auch Funktionskenngrößen genannt.

Besonders vorteilhaft ist die Bestimmung des Amplitudenmaximums und/oder der Halbwertsbreite insbesondere bei 25% oder 50% oder 75% des Amplitudenmaximums der Wertepaarfolgen der Überlagerungspermeabilität und der Kenngrößen des Oberwellengehalts des Zeitsignals der tangentialen Magnetfeldstärke und in Abhängigkeit von der magnetischen Feldstärke. Diese charakteristischen Größen dienen dann als Eingangsgrößen für das statistische Analyseverfahren.

Durch das Reduzieren der Wertepaarfolgen auf charakteristische, skalare Größen kann ein sehr einfaches statistisches Analyseverfahren zur Anwendung kommen.

Es kann sich dabei um eine Regressionsanalyse, insbesondere eine lineare Regressionsanalyse handeln.

Insbesondere bei komplexeren Eingangsgrößen für das statistische Analyseverfahren kann das Analyseverfahren vorteilhaft aus dem Gebiet der Mustererkennung stammen.

Die Schichtdickenbestimmung lässt sich auf Prüfkörper mit unterschiedlichster Schichtenfolge und elektromagnetischen Eigenschaften der Schichten anwenden. So kann eine der Schichten, insbesondere die Deckschicht para- oder diamagnetisch sein. Zumindest eine der inneren Schichten, insbesondere die Basisschicht ist vorzugsweise ferromagnetisch.

Vorteilhaft ist das erfindungsgemäße Verfahren zur Bestimmung der Schichtdicke auf eine Diffusionsschicht anwendbar, die an der Grenzfläche zweier Schichten unterschiedlicher Stoffzusammensetzung entstanden ist. Die Diffusionsschicht wuchs dabei, beispielsweise durch hohe Temperaturen, auf Kosten der Schichtdicken der Nachbarschichten.

Vorteilhaft wird das erfindungsgemäße Verfahren zur Bestimmung der Schichtdicke einer Diffusionsschicht eingesetzt, die aus einer Mischung der Atome einer angrenzenden ferromagnetischen und einer angrenzenden para- oder diamagnetischen Schicht besteht.

Insbesondere kann die para- oder diamagnetische Schicht Aluminium und Silizium, die ferromagnetische Schicht Aluminium und Eisen oder Eisen, Mangan und/oder Kohlenstoff oder Stickstoff enthalten oder aus Stahl bestehen.

Die erfindungsgemäße Vorrichtung zur Bestimmung der Schichtdicken eines aus mindestens zwei Schichten unterschiedlicher Stoffzusammensetzung bestehenden Prüfkörpers weist einen Sensor und eine Sensorelektronik auf. Der Sensor enthält zumindest einen Elektromagneten, einen Magnetfeldsensor und eine Detektionsspule. Der Sensor und die Sensorelektronik sind ausgelegt, den Prüfkörper mit einem magnetischen Wechselfeld zu beaufschlagen, einen Oberwellengehalt des Zeitsignals der tangentialen Magnetfeldstärke, eine Überlagerungspermeabilität und eine magnetische Feldstärke an der oder nahe der Oberfläche des Prüfkörpers aufzunehmen.

Die Sensorelektronik weist einen Schätzer auf, der ausgelegt ist, die Schichtdicken des Prüfkörpers aus dem Oberwellengehalt des Zeitsignals der tangentialen Magnetfeldstärke und der Überlagerungspermeabilität in Abhängigkeit von der magnetischen Feldstärke durch ein statistisches Analyseverfahren zu ermitteln.

Erfindungsgemäß wurde erkannt und durch das erfindungsgemäße Verfahren, die erfindungsgemäße Vorrichtung sowie die Verwendung der Vorrichtung nutzbar gemacht, dass sich eine ferromagnetische Diffusionsschicht und weitere ferromagnetische Schichten in ihren Beiträgen zu den Messwerten voneinander unterscheiden lassen. Selbst paramagnetische oder diamagnetische Schichten sind beispielsweise durch ihren Beitrag zur Abhebung des Sensors 5 messbar.

Erfindungsgemäß wird die zuvor offenbarte Vorrichtung zur Bestimmung der Schichtdicken eines Prüfkörpers verwendet.

Zumindest eine der Schichten des Prüfkörpers, insbesondere die Deckschicht kann paramagnetisch oder diamagnetisch sein.

Vorteilhaft kann die zuvor offenbarte Vorrichtung zur Schichtdickenbestimmung an einem Prüfkörper verwendet werden, bei dem eine der inneren Schichten ferromagnetisch ist, insbesondere an einem Prüfkörper, der eine ferromagnetische Diffusionsschicht aufweist.

Die Erfindung wird nachstehend ohne Beschränkung des allgemeinen Erfindungsgedankens anhand von Ausführungsbeispielen unter Bezugnahme auf die Figuren beschrieben.

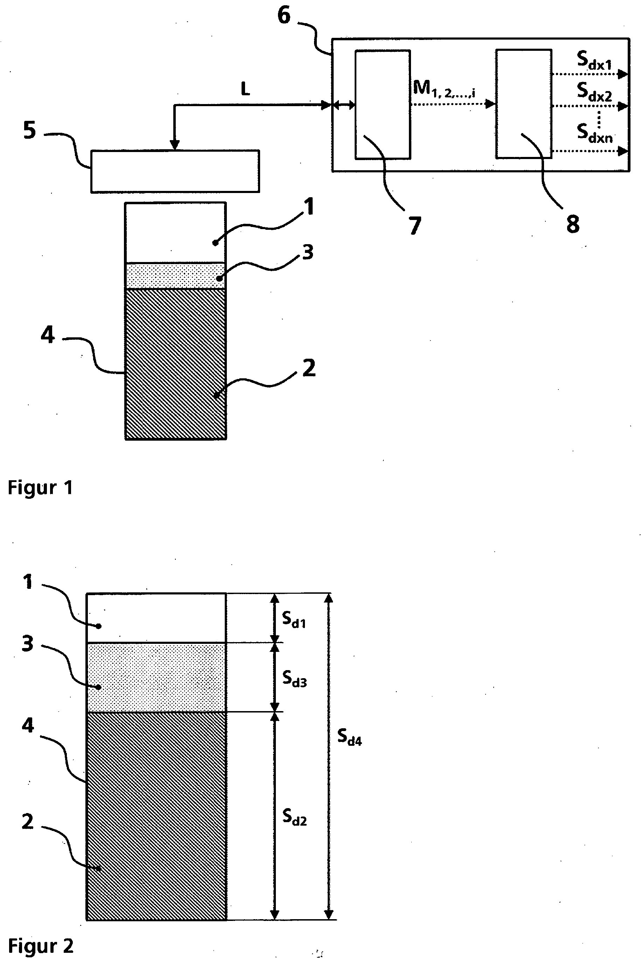

Fig. 1 zeigt eine erfindungsgemäße Anordnung aufweisend einen Prüfkörper 4 und eine Messvorrichtung. Die Messvorrichtung besteht aus einem Sensor 5 und einer Sensorelektronik 6, die über einen Steuermesskanal L verbunden sind. Der Prüfkörper 4 weist drei Schichten 1, 3 und 2 mit unterschiedlichen elektromagnetischen Eigenschaften auf. Der Sensor 5 ist auf oder nahe der Oberfläche des Prüfkörpers angeordnet und mit der Sensorelektronik 6 verbunden. Die Sensorelektronik 6 enthält zumindest eine Steuerung 7 und einen Schätzer 8, der mehrere Schätzergebnisse $S_{dx1}$, $S_{dx2}$ bis $S_{dxn}$ aus Funktionskenngrößen $M_1$, $M_2$ bis $M_i$ erzeugt.

Fig. 2 zeigt den Prüfkörper 4 mit der Schichtdicke der Deckschicht $S_{d1}$, der Schichtdicke der Diffusionsschicht $S_{d3}$, der Schichtdicke der Basisschicht $S_{d2}$ und der Gesamtdicke des Prüfkörpers 4 $S_{d4}$.

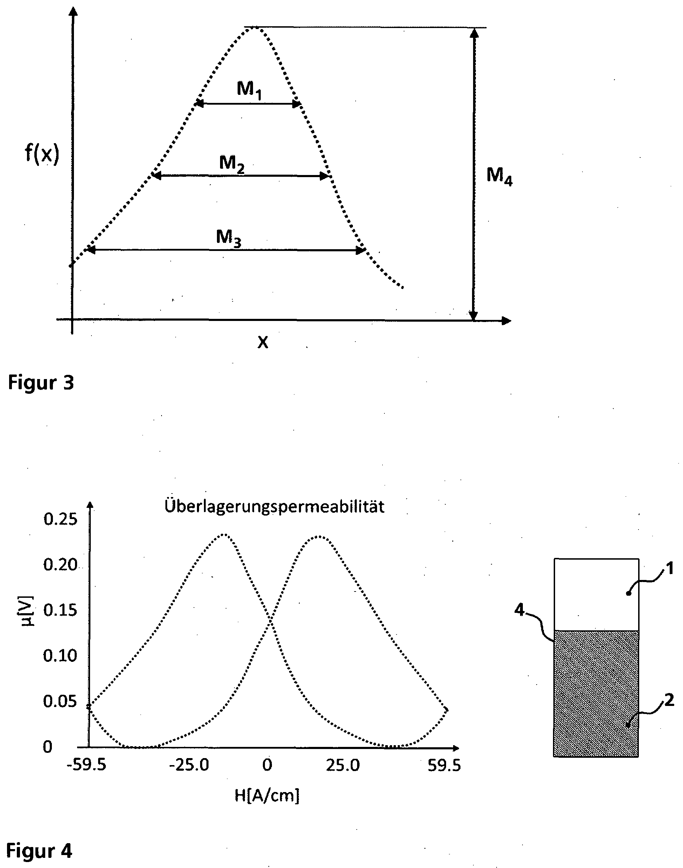

Fig. 3 zeigt zur Darstellung einer Abhängigkeit der Größe f(x) von x eine Folge von Messwertpaaren (f(x),x). Des Weiteren ist die grafische Bestimmung des Amplitudenmaximums, das heißt die Bestimmung der Funktionskenngröße $M_4$ dargestellt. Bei den Funktionskenngrößen $M_1$, $M_2$ und $M_3$ handelt es sich jeweils um die Halbwertsbreite bei 75%, 50% und 25% des Amplitudenmaximums $M_4$.

Fig. 4, die linke Abbildung zeigt eine typische Folge von Messwerten der Überlagerungspermeabilität in Abhängigkeit von der magnetischen Feldstärke für einen Prüfkörper mit einer Schichtenfolge entsprechend der rechten Abbildung.

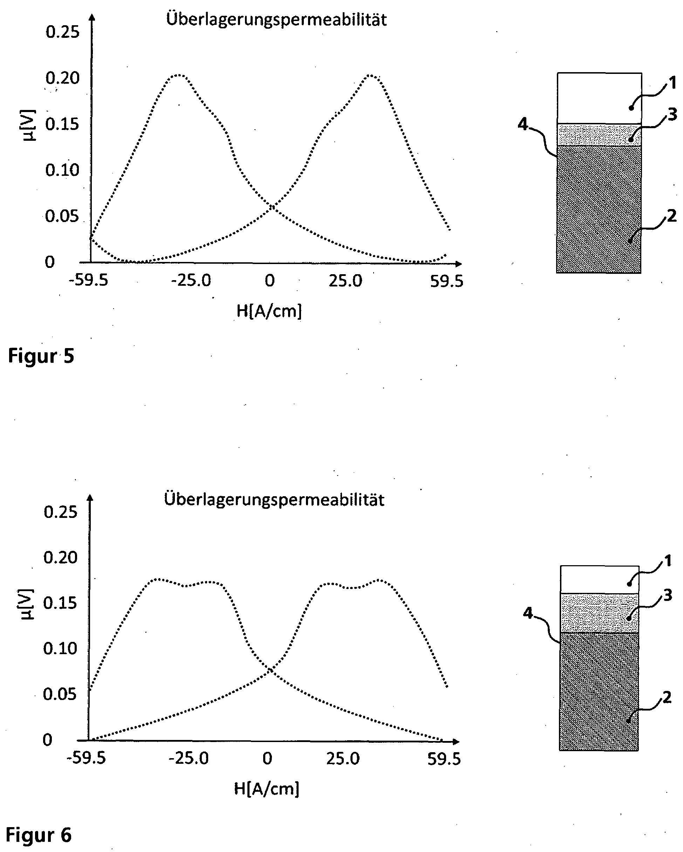

Fig. 5, die linke Abbildung zeigt eine typische Folge von Messwerten der Überlagerungspermeabilität in Abhängigkeit von der magnetischen Feldstärke für einen Prüfkörper mit einer Schichtenfolge entsprechend der rechten Abbildung.

Fig. 6, die linke Abbildung zeigt eine typische Folge von Messwerten der Überlagerungspermeabilität in Abhängigkeit von der magnetischen Feldstärke für einen Prüfkörper mit einer Schichtenfolge entsprechend der rechten Abbildung.

Die Darstellung nach Fig. 1 ist schematisch stark vereinfacht.

Dargestellt ist ein Prüfkörper 4, der einen Schichtaufbau aufweist. Die Schichtdicken sind unbekannt und mit Hilfe des Sensors 5 und der Sensorelektronik 6 zu bestimmen. Die Schichten unterscheiden sich untereinander in ihren elektromagnetischen oder magnetischen Eigenschaften. So können die Schichten para-, dia-, ferro- oder antiferromagnetisch sein. Beispielhaft sei die äußere Deckschicht 1 paramagnetisch oder diamagnetisch und die Basisschicht 2 ferromagnetisch. Als Basisschicht wird die sensorfernste Schicht bezeichnet, die einen Beitrag zum Messsignal liefert. Schicht 3 sei eine Diffusionsschicht, die sowohl Atome der Schicht 1, als auch Atome der Schicht 2 enthält. Eine solche Diffusionsschicht entsteht beispielsweise bei der Prozessierung eines zu Beginn nur aus den Schichten 1 und 2 aufgebauten Körpers durch Einwirkung hoher Temperaturen über einen längeren Zeitraum. Schicht 1 ist die sensornächste Schicht und kann beispielsweise Atome von Aluminium, Silizium, Chrom und/oder Stickstoff enthalten, oder auch organische Polymere, beispielsweise Lacke aufweisen. Schicht 2 kann beispielsweise Atome von Eisen, Mangan, Kobalt enthalten oder daraus bestehen. Durch Prozessierung entsteht die Diffusionsschicht 3, die eine Mischung der Atome aus den benachbarten Schichten aufweist und sich dadurch in ihren elektromagnetischen Eigenschaften von den angrenzenden Schichten unterscheidet.

Ein Sensor 5 ist nahe oder auf der Oberfläche des Prüfkörpers 4 und der Schicht 1 angeordnet. Der Abstand zur Oberfläche ist entweder Null, bekannt, wird gemessen oder, im Fall einer wiederholenden Messung, konstant gehalten. Der Sensor 5 erzeugt durch einen aus zumindest einer Spule aufgebauten Elektromagneten ein magnetisches Feld im Prüfkörper 4 welches durch einen Magnetfeldsensor, der Teil des Sensors 5 ist, gemessen wird. Die Sensorelektronik 6 ist ausgelegt, durch die Steuerung 7 den Elektromagneten so anzusteuern, dass das durch den Magnetfeldsensor gemessene Magnetfeld mit einem Vorgabewert übereinstimmt. Der Wert der magnetischen Feldstärke und dessen Zeitfunktion lassen sich so durch die Steuerung 7 beliebig an die Messaufgabe anpassen. Ebenfalls Teil des Sensors 5 ist eine Detektionsspule zur Messung der durch den Prüfkörper 4 erzeugten magnetischen Felder. Der Sensor 5 und die Steuerung 7 sind so ausgelegt, dass zumindest eine Oberwellenanalyse und die Messung der Überlagerungspermeabilität möglich sind.

Bei der Oberwellenanalyse wird durch den Elektromagneten des Sensors 5 ein sinusförmiges magnetisches Wechselfeld erzeugt. Eine Magnetfeldsonde, beispielsweise eine Hallsonde, erfasst den Zeitverlauf der magnetischen Tangentialfeldstärke. Der Zeitverlauf der Tangentialfeldstärke wird bei Vorhandensein ferromagnetischer Materialien durch die Nichtlinearität der ferromagnetischen Hysterese verzerrt, es kommt zu Abweichungen der Kurvenform vom sinusförmigen Verlauf. Insbesondere in der Nähe der Nulldurchgänge zeigen sich deutliche Verzerrungen. Die ferromagnetische Hysterese verursacht im Signal der Tangentialfeldstärke neben der Grundschwingung ausgeprägte Oberwellenanteile (harmonische Schwingungen), die durch den nichtlinearen magnetischen Widerstand des Messobjekts hervorgerufen werden. Mithilfe einer Fast Fourier-Analyse können die Grund- und Oberwellenanteile numerisch bestimmt werden. Die Auswertesoftware des Messsystems beschreibt diese Oberwellenanteile durch charakteristische Kenngrößen M, beispielsweise in Form eines Klirrfaktors.

Die Wechselwirkung des Feldes mit den Schichten des Prüfkörpers 4 bildet sich im verzerrten Zeitsignal des Feldes und damit in den Oberwellenanteilen ab.

Zur Messung der Überlagerungspermeabilität wird durch den Elektromagneten des Sensors 5 ein magnetisches Feld im Prüfkörper 4 erzeugt, das einer Kombination aus einem sinusförmigen magnetischen Erregerfeld und einem überlagerten höherfrequenten Wechselfeld entspricht. Beim durch das Erregerfeld verursachten, langsamen, quasistatischen Durchlaufen der magnetischen Hystereseschleife entstehen kleine Innenschleifen durch das Wechselfeld. Durch die Sensorelektronik wird die Überlagerungspermeabilität aus der Steigung der Innenschleifen in Abhängigkeit von der magnetischen Feldstärke des Erregerfeldes bestimmt.

Vorzugsweise liegt die Frequenz des sich periodisch ändernden quasistatischen Erregerfeldes in einem Bereich zwischen 50 Hz und 500 Hz. Die Frequenz des Wechselfeldes ist größer 10 kHz, vorzugsweise circa 100 kHz. Vorteilhaft sind der Sensor 5 und die Sensorelektronik 6 ausgelegt, weitere Messungen durchzuführen, beispielsweise die Messung des magnetischen und/oder akustischen Barkhausenrauschens in Abhängigkeit von der magnetischen Feldstärke. Zusätzliche Messungen können die statistische Unsicherheit bei der Bestimmung der Schichtdicken des Prüfkörpers 4 verringern.

Die im Rahmen der Oberwellenanalyse und der Messung der Überlagerungspermeabilität gemessenen Wertepaare, aber auch der im Rahmen weiterer Messungen erzeugten Wertepaare, setzen sich aus dem jeweiligen Messwert und dem Wert der magnetischen Feldstärke zusammen. Durch eine Vielzahl von Wertepaaren nähert sich die entstehende Wertefolge einer stetigen Funktion an, wodurch typische skalare Funktionskenngrößen $M_1$, $M_2$ bis $M_i$ genau bestimmbar sind. Vorteilhaft werden für zumindest eine Wertefolge eine oder mehrerer Funktionskenngrößen $M_1$, $M_2$ bis $M_i$ beispielsweise lokale, globale Maxima und/oder Minima oder Wendepunkte oder Halbwertsbreiten, insbesondere bei 75%, 50% und/oder 25% des zugehörigen lokalen Amplitudenmaximums bestimmt und dem Schätzer 8 zugeführt.

Auch kann neben den vorher genannten Messungen von mehreren Wertepaaren die Messung in Bezug auf zumindest eine Materialeigenschaft auf einen Messwert bei einer ausgewählten festen magnetischen Feldstärke beschränkt sein, sodass dieser Messwert selbst als eine Eingangsgröße dem Schätzer 8 bereitgestellt werden kann. Beispielsweise kommt dies einer Messung des lokalen Maximums gleich, wenn der Funktionsverlauf bekannt ist und die magnetische Feldstärke für die Einzelmessung auf die Position des abgeschätzten lokalen Maximums gesetzt wird. Gewöhnlich werden jedoch mindestens zehn, mindestens hundert oder mindestens tausend, vorzugsweise eine sehr hohe Zahl an Wertepaaren gemessen, sodass sich die Funktionskenngrößen $M_1$, $M_2$ bis $M_i$ mit großer Genauigkeit bestimmen lassen. Die Bestimmung erfolgt in der Steuerung 7 beispielsweise mit Hilfe eines Computers, Prozessors, Mikrocontrollers und zugehörigem Programm oder einer FPGA oder eines ASIC. Sowohl die Steuerung 7 als auch der Schätzer 8 können in Software implementiert sein, die auf einem Computer abgearbeitet wird.

Die von der Steuerung 7 bereitgestellten Funktionskenngrößen $M_1$, $M_2$ bis $M_i$ werden dem Schätzer 8, zugeführt, der mit Hilfe eines statistischen Analyseverfahrens, das heißt mit einem an die Messaufgabe angepassten Modell, die Funktionskenngrößen $M_1$, $M_2$ bis $M_i$ auf die Ausgangsgrößen $S_{dx1}$, $S_{dx2}$ bis $S_{dxn}$ abbildet. Die einzelnen Ausgangsgrößen $S_{dx1}$, $S_{dx2}$ bis $S_{dxn}$ entsprechen im Rahmen der Messgenauigkeit des Gesamtaufbaus den jeweiligen Schichtdicken $S_{d1}$, $S_{d2}$ bis $S_{dn}$ des Prüfkörpers 4. Durch geeignete Anpassung oder Einstellung des Modells lassen sich alle Einzelschichtdicken und die Gesamtschichtdicke ermitteln.

Vorzugsweise bildet der Schätzer 8 die Eingangsgrößen $M_1$, $M_2$ bis $M_i$ durch ein Regressionsverfahren auf die Ausgangsgrößen $S_{dx1}$, $S_{dx2}$ bis $S_{dxn}$ ab. Vorteilhaft kommt eine lineare Regression zur Anwendung, die mit einer linearen Funktion eine Menge von n Datenpunkten optimal im Sinne der kleinsten Summe der Fehlerquadrate annähert. Das Modell beschreibt den Messwert der Schichtdicke $S_{dxn}$ als Polynom i-ten Grades

$$S_{dxn} = a_{0n} + a_{1n} \cdot M_1 + a_{2n} \cdot M_2 + a_{3n} \cdot M_3 + \ldots + a_{in} \cdot M_i$$

mit Regressionskoeffizienten $a_{0n}$, $a_{1n}$ bis $a_{in}$ und Funktionskenngrößen $M_1$, $M_2$ bis $M_i$.

Das Modell wird durch die Regressionskoeffizienten an die Messaufgabe, das heißt den Prüfkörper angepasst. Dazu werden die Eingangsgrößen $M_1$, $M_2$ bis $M_i$ an zumindest einem, vorzugsweise mehreren Prüfkörpern mit bekannter Schichtfolge und Schichtdicken $S_{d1}$, $S_{d2}$ usw. gemessen. Da der Schichtaufbau bekannt ist, sind auch die Ausgangsgrößen $S_{dx1}$, $S_{dx2}$ bis $S_{dxn}$ bekannt, die bei Messfehler Null den Schichtdicken $S_{d1}$, $S_{d2}$ bis $S_{dn}$ entsprechen würden. Durch die bekannten Eingangs- und Ausgangsgrößen lässt sich das Modell mit Ziel eines geringen Fehlers an die Messaufgabe anpassen, das heißt kalibrieren. Ein Prüfkörper mit bekanntem Schichtaufbau oder zumindest einer bekannten Schichtdicke, der zur Anpassung des Modells dient, wird Kalibrierkörper genannt.

Die Schichtdicke einer unmagnetischen Schicht oder unmagnetischer Schichten fließt indirekt in die Messung der magnetischen Eigenschaften ein, da sich durch die unmagnetischen Schichten der Abstand einer tiefliegenden magnetischen Schicht vom Sensor vergrößert. Damit sind durch den erfindungsgemäßen Aufbau auch unmagnetische Schichten der magnetischen Schichtdickenmessung zugänglich. Jede der Schichten des Prüfkörpers, ob magnetisch oder nicht, liefert einen Beitrag zu den Messsignalen, wenn die Basisschicht magnetisch ist.

Der Prüfkörper 4 kann unter anderem folgende Schichtsysteme für Schicht 1 // Schicht 2 aufweisen:

- Aluminium, Silizium // Stahl

- Aluminium, Silizium / Diffusionsschicht /Stahl

- organisches Polymer // Stahl

Die Basisschicht kann so dick sein, das Sie nicht vollständig in den Erfassungsbereich des erfindungsgemäßen Verfahrens oder/und Vorrichtung fällt. Dann lässt sich die Schichtdicke der Basisschicht und die Gesamtschichtdicke nicht auf Basis des erfindungsgemäßen Verfahrens, der Vorrichtung bestimmen. Die Schichtdicken der inneren Schichten im Erfassungsbereich lassen sich jedoch weiter bestimmen.

Bezugszeichenliste

1    Deckschicht
2    Basisschicht
3    innere Schicht
4    Prüfkörper
5    Sensor
6    Sensorelektronik
7    Steuerung
8    Schätzer

**Patentansprüche**

1. Verfahren zur Schichtdickenbestimmung an einem aus mindestens zwei Schichten aufgebauten Prüfkörper **(4),** mit einer äußeren Deckschicht **(1)** und einer in Bezug auf die Deckschicht tiefer im Prüfkörper angeordneten Basisschicht **(2),** wobei die Deckschicht und die Basisschicht unterschiedliche magnetische Eigenschaften und Stoffzusammensetzung aufweisen mit folgenden Schritten:

   - Erzeugen eines magnetischen Wechselfeldes im Prüfkörper;
   - Messen der magnetischen Feldstärke an oder nahe der Oberfläche des Prüfkörpers;
   - Messen von zumindest einem, vorzugsweise einer Vielzahl von Wertepaaren des Oberwellengehalts des Zeitsignals der tangentialen Magnetfeldstärke in Abhängigkeit von der magnetischen Feldstärke;
   - Messen von zumindest einem, vorzugsweise einer Vielzahl von Wertepaaren der Überlagerungspermeabilität in Abhängigkeit von der magnetischen Feldstärke und

   - Bestimmen der Schichtdicke der Deckschicht **(1)** und/oder einer oder mehrerer anderer im Prüfkörper angeordneten Schichten durch ein statistisches Analyseverfahren, mit den gemessenen Wertepaaren des Oberwellengehalts des Zeitsignals der tangentialen Magnetfeldstärke und der Überlagerungspermeabilität oder aus den Wertepaaren bestimmten lokalen und/oder globalen Extremwerte und/oder Symmetrien und/oder Wendepunkte und/oder Halbwertsbreiten und/oder Klirrfaktoren als Eingangsgrößen.

2. Verfahren nach Anspruch 1, **dadurch gekennzeichnet, dass** das statistische Analyseverfahren durch Messung von Wertepaaren nach Anspruch 1 an einem Kalibrierkörper kalibriert wird.

3. Verfahren nach einem der Ansprüche 1 oder 2, **dadurch gekennzeichnet, dass** in das statistische Analyseverfahren die Materialkennwerte Härte, Streckgrenze, Zugfestigkeit, Bruchdehnung und/oder Gleichmaßdehnung einfließen.

4. Verfahren nach einem der Ansprüche 1 bis 3, **dadurch gekennzeichnet, dass** zumindest zwei, vorzugsweise eine Vielzahl von Wertepaaren des magnetischen und/oder akustischen Barkhausenrauschens in Abhängigkeit von der magnetischen Feldstärke gemessen werden und die Messwerte oder daraus bestimmte lokale und/oder globale Extremwerte und/oder Symmetrien und/oder Wendepunkte und/oder Halbwertsbreiten und/oder Klirrfaktoren als Eingangsgrößen in das statistische Analyseverfahren einfließen.

5. Verfahren nach einem der Ansprüche 1 bis 4, **dadurch gekennzeichnet, dass aus** gemessenen Wertepaaren ein Amplitudenmaximum und/oder eine Halbwertsbreite insbesondere bei 25% oder 50% oder 75% des Amplitudenmaximums bestimmt wird und als Eingangsgröße in das statistische Analyseverfahren einfließt.

6. Verfahren nach einem der Ansprüche 1 bis 5, **dadurch gekennzeichnet, dass** das statistische Analyseverfahren eine Regressionsanalyse ist.

7. Verfahren nach einem der Ansprüche 1 bis 6, **dadurch gekennzeichnet, dass** das statistische Analyseverfahren eine Mustererkennungsverfahren ist.

8. Verfahren nach einem der Ansprüche 1 bis 7, **dadurch gekennzeichnet, dass** zumindest eine der Schichten des Prüfkörpers **(4),** insbesondere die Deckschicht **(1)** paramagnetisch oder diamagnetisch ist.

9. Verfahren nach einem der Ansprüche 1 bis 8, **dadurch gekennzeichnet, dass** zumindest eine der inneren Schichten des Prüfkörpers **(4)** oder die Basisschicht **(2)** ferromagnetisch ist.

10. Verfahren nach einem der Ansprüche 1 bis 9, **dadurch gekennzeichnet, dass** zumindest eine der Schichten des Prüfkörpers **(4)** eine Diffusionsschicht **(3)** ist, die ein Gemisch von Atomen der angrenzenden Schichten, insbesondere der Deckschicht **(1)** enthält oder daraus besteht.

11. Vorrichtung zur Bestimmung der Schichtdicken eines mindestens zwei Schichten unterschiedlicher Stoffzusammensetzung aufweisenden Prüfkörpers **(4),** mit einem Sensor **(5)** und einer Sensorelektronik **(6),** wobei der Sensor **(5)** einen Elektromagneten, einen Magnetfeldsensor und eine Detektionsspule aufweist und Sensor **(5)** und Sensorelektronik **(6)** eingerichtet sind, den Prüfkörper **(4)** mit einem magnetischen Wechselfeld zu beaufschlagen, einen Oberwellengehalt des Zeitsignals der tangentialen Magnetfeldstärke, eine Überlagerungspermeabilität und eine magnetische Feldstärke an der oder nahe der Oberfläche des Prüfkörpers aufzunehmen, **dadurch gekennzeichnet, dass** die Sensorelektronik **(6)** mit einem Schätzer **(8)** ausgestattet ist, der eingerichtet ist, zumindest eine der Schichtdicken **($S_{d1}, S_{d2}, S_{d3}, ..., S_{dn}$)** des Prüfkörpers **(4)** aus dem Oberwellengehalt des Zeitsignals der tangentialen Magnetfeldstärke und der Überlagerungspermeabilität in Abhängigkeit von der magnetischen Feldstärke sowie den daraus ermittelten lokalen und/oder globalen Extremwerten und/oder Symmetrien und/oder Wendepunkten und/oder Halbwertsbreiten und/oder Klirrfaktoren mittels eines statistischen Analyseverfahrens zu bestimmen.

12. Vorrichtung nach Anspruch 11, **dadurch gekennzeichnet, dass** die Signalverarbeitungseinheit **(6)** ausgelegt ist, Parameter des Schätzers **(8)** durch Messwerte des Oberwellengehalts des Zeitsignals der tangentialen Magnetfeldstärke und der Überlagerungspermeabilität in Abhängigkeit von der magnetischen Feldstärke an einem Kalibrierkörper einzustellen.

13. Verwendung der Vorrichtung nach einem der Ansprüche 11 bis 12 zur Bestimmung zumindest einer der Schichtdicken **($S_{d1}, S_{d2}, S_{d3}, ..., S_{dn}$)** eines Prüfkörpers **(4), wobei** zumindest eine der Schichten **(1), (2), (3)** des Prüfkörpers **(4),** insbesondere die Deckschicht **(1)** paramagnetisch oder diamagnetisch ist.

14. Verwendung nach Anspruch 13, **dadurch gekennzeichnet, dass** zumindest eine der inneren Schichten, insbesondere die Diffusionsschicht **(3)** und/oder die Basisschicht **(2)** des Prüfkörpers **(4)** ferromagnetisch ist.

**Claims**

1. Method for layer thickness determination on a test body (4) made up of at least two layers, with an outer cover layer (1) and a base layer (2), arranged deeper in the test body with respect to the cover layer, the cover layer and the base layer having different magnetic properties and a different material composition, comprising the following steps:

   - generating an alternating magnetic field in the test body;
   - measuring the magnetic field strength at or near the surface of the test body;
   - measuring at least one pair of values, preferably a plurality of pairs of values, of the harmonic content of the time signal of the tangential magnetic field strength in dependence on the magnetic field strength;
- measuring at least one pair of values, preferably a plurality of pairs of values, of the incremental permeability in dependence on the magnetic field strength and
- determining the layer thickness of the cover layer (1) and/or one or more other layers arranged in the test body by a method of statistical analysis, with the measured pairs of values of the harmonic content of the time signal of the tangential magnetic field strength and the incremental permeability or local and/or global extreme values and/or symmetries and/or reversal points and/or half-value widths and/or distortion factors determined from the pairs of values as input variables.

2. Method according to Claim 1, **characterized in that** the method of statistical analysis is calibrated by measuring pairs of values according to Claim 1 on a calibration body.

3. Method according to either of Claims 1 and 2, **characterized in that** the material characteristics of hardness, yield strength, tensile strength, ultimate elongation and/or uniform elongation are entered in the method of statistical analysis.

4. Method according to one of Claims 1 to 3, **characterized in that** at least two pairs of values, preferably a plurality of pairs of values, of the magnetic and/or acoustic Barkhausen noise are measured in dependence on the magnetic field strength and the measured values or local and/or global extreme values and/or symmetries and/or reversal points and/or half-value widths and/or distortion factors determined therefrom are entered as input variables in the method of statistical analysis.

5. Method according to one of Claims 1 to 4, **characterized in that** an amplitude maximum and/or a half-value width, in particular at 25% or 50% or 75% of the amplitude maximum, is determined from measured pairs of values and entered as an input variable in the method of statistical analysis.

6. Method according to one of Claims 1 to 5, **characterized in that** the method of statistical analysis is a regression analysis.

7. Method according to one of Claims 1 to 6, **characterized in that** the method of statistical analysis is a pattern recognition method.

8. Method according to one of Claims 1 to 7, **characterized in that** at least one of the layers of the test body (4), in particular the cover layer (1), is paramagnetic or diamagnetic.

9. Method according to one of Claims 1 to 8, **characterized in that** at least one of the inner layers of the test body (4) or the base layer (2) is ferromagnetic.

10. Method according to one of Claims 1 to 9, **characterized in that** at least one of the layers of the test body (4) is a diffusion layer (3), which contains or consists of a mixture of atoms of the adjacent layers, in particular the cover layer (1).

11. Device for determining the layer thicknesses of a test body (4) having at least two layers of a different material composition, comprising a sensor (5) and sensor electronics (6), the sensor (5) having an electromagnet, a magnetic field sensor and a detection coil and the sensor (5) and the sensor electronics (6) being designed to apply an alternating magnetic field to the test body (4) and record a harmonic content of the time signal of the tangential magnetic field strength, an incremental permeability and a magnetic field strength at or near the surface of the test body, **characterized in that** the sensor electronics (6) are provided with an estimator (8), which is designed to determine by means of a method of statistical analysis at least one of the layer thicknesses ($S_{d1}$, $S_{d2}$, $S_{d3}$,...,$S_{dn}$) of the test body (4) from the harmonic content of the time signal of the tangential magnetic field strength and the incremental permeability in dependence on the magnetic field strength and also the local and/or global extreme values and/or symmetries and/or reversal points and/or half-value widths and/or distortion factors determined therefrom.

12. Device according to Claim 11, **characterized in that** the signal processing unit (6) is designed to set parameters of the estimator (8) by measured values of the harmonic content of the time signal of the tangential magnetic field strength and the incremental permeability in dependence on the magnetic field strength at a calibration body.

**13.** Use of the device according to either of Claims 11 and 12 for determining at least one of the layer thicknesses ($S_{d1}$, $S_{d2}$, $S_{d3}$,..., $S_{dn}$) of a test body (4), wherein at least one of the layers (1), (2), (3) of the test body (4), in particular the cover layer (1), is paramagnetic or diamagnetic.

**14.** Use according to Claim 13, **characterized in that** at least one of the inner layers, in particular the diffusion layer (3) and/or the base layer (2), of the test body (4) is ferromagnetic.

**Revendications**

**1.** Procédé de détermination d'épaisseur de couche au niveau d'un corps de contrôle (4) structuré en au moins deux couches, avec une couche de revêtement (1) extérieure et une couche de base (2) disposée plus profondément dans le corps de contrôle que la couche de revêtement, la couche de revêtement et la couche de base comportant des propriétés magnétiques et une composition de matière différentes, avec les étapes suivantes :

- production d'un champ magnétique alternatif dans le corps de contrôle ;
- mesure de l'intensité de champ magnétique au niveau de la surface du corps de contrôle ou à proximité de celle-ci ;
- mesure d'au moins une, de préférence d'une pluralité de paires de valeurs de la teneur en harmoniques du signal de temps de l'intensité tangentielle de champ magnétique en fonction de l'intensité de champ magnétique ;
- mesure d'au moins une, de préférence d'une pluralité de paires de valeurs de la perméabilité à la superposition en fonction de l'intensité de champ magnétique ; et
- détermination de l'épaisseur de couche de la couche de revêtement (1) et/ou d'une ou plusieurs autres couches disposées dans le corps de contrôle par le biais d'un procédé d'analyse statistique, avec les paires de valeurs mesurées de la teneur en harmoniques du signal de temps de l'intensité tangentielle de champ magnétique et de la perméabilité à la superposition ou des valeurs extrêmes et/ou symétries et/ou points d'inflexion et/ou largeurs de demi-valeur et/ou facteurs de distorsion globaux et/ou locaux définis à partir des paires de valeurs servant de grandeurs d'entrée.

**2.** Procédé selon la revendication 1, **caractérisé en ce que** le procédé d'analyse statistique est étalonné au niveau d'un corps d'étalonnage par mesure de paires de valeurs selon la revendication 1.

**3.** Procédé selon l'une quelconque des revendications 1 ou 2, **caractérisé en ce que** les valeurs caractéristiques de la matière influent sur la dureté, la résistance à l'allongement, la résistance à la traction, l'allongement à la rupture et/ou l'uniformité de l'allongement dans le procédé d'analyse statistique.

**4.** Procédé selon l'une quelconque des revendications 1 à 3, **caractérisé en ce qu'**au moins deux, de préférence une pluralité, de paires de valeurs du bruit magnétique et/ou acoustique de Barkhausen sont mesurées en fonction de l'intensité de champ magnétique et que les valeurs de mesure ou les valeurs extrêmes et/ou symétries et/ou points d'inflexion et/ou largeurs de demi-valeur et/ou facteurs de distorsion globaux et/ou locaus définis à partir des paires de valeurs servant de grandeurs d'entrée ont une influence dans le procédé d'analyse statistique.

**5.** Procédé selon l'une quelconque des revendications 1 à 4, **caractérisé en ce qu'**un maximum d'amplitude et/ou une largeur de demi-valeur est défini à partir des paires de valeurs mesurées, notamment à 25 % ou 50 % ou 75 % du maximum d'amplitude et que cette donnée a une influence, en tant que grandeur d'entrée, dans le procédé d'analyse statistique.

**6.** Procédé selon l'une quelconque des revendications 1 à 5, **caractérisé en ce que** le procédé d'analyse statistique est une analyse de régression.

**7.** Procédé selon l'une quelconque des revendications 1 à 6, **caractérisé en ce que** le procédé d'analyse statistique est un procédé d'identification de modèle.

**8.** Procédé selon l'une quelconque des revendications 1 à 7, **caractérisé en ce qu'**au moins une des couches du corps de contrôle (4), notamment la couche de revêtement (1), est paramagnétique ou diamagnétique.

**9.** Procédé selon l'une quelconque des revendications 1 à 8, **caractérisé en ce qu'**au moins une des couches intérieures du corps de contrôle (4) ou la couche de base (2) est ferromagnétique.

**10.** Procédé selon l'une quelconque des revendications 1 à 9, **caractérisé en ce qu'**au moins une des couches du corps de contrôle (4) est une couche de diffusion (3) contenant un mélange d'atomes des couches connexes, notamment de la couche de revêtement (1), ou qu'elle se compose dudit mélange.

**11.** Dispositif pour déterminer les épaisseurs de couche d'un corps de contrôle (4) comportant au moins deux couches de composition de matière différente, avec un capteur (5) et un système électronique de capteur (6), le capteur (5) comportant un électroaimant, un détecteur de champ magnétique et une bobine de détection et capteur (5) et système électronique de capteur (6) étant conçus pour appliquer au corps de contrôle (4) un champ magnétique alternatif, pour recueillir une teneur en harmoniques du signal de temps de l'intensité tangentielle de champ magnétique, une perméabilité à la superposition et une intensité de champ magnétique au niveau de la surface du corps de contrôle ou à proximité de celle-ci, **caractérisé en ce que** le système électronique de capteur (6) est doté d'un système d'estimation (8) conçu pour déterminer, à l'aide d'un procédé d'analyse statistique, au moins une des épaisseurs de couche ($S_{d1}$, $S_{d2}$, $S_{d3}$,..., $S_{dn}$) du corps de contrôle (4) à partir de la teneur en harmoniques du signal de temps de l'intensité tangentielle de champ magnétique et de la perméabilité à la superposition, en fonction de l'intensité de champ magnétique ainsi que des valeurs extrêmes et/ou symétries et/ou points d'inflexion et/ou largeurs de demi-valeur et/ou facteurs de distorsion globaux et/ou locaux calculés à partir de ladite intensité.

**12.** Dispositif selon la revendication 11, **caractérisé en ce que** l'unité de traitement de signal (6) est conçue pour régler les paramètres du système d'estimation (8) au niveau d'un corps d'étalonnage par le biais des valeurs de mesure de la teneur en harmoniques du signal de temps de l'intensité tangentielle de champ magnétique et de la perméabilité à la superposition, en fonction de l'intensité de champ magnétique.

**13.** Utilisation du dispositif selon l'une quelconque des revendications 11 à 12 pour déterminer au moins une des épaisseurs de couche ($S_{d1}$, $S_{d2}$, $S_{d3}$,..., $S_{dn}$) d'un corps de contrôle (4), au moins une des couches (1), (2), (3) du corps de contrôle (4), notamment la couche de revêtement (1), étant paramagnétique ou diamagnétique.

**14.** Utilisation selon la revendication 13, **caractérisé en ce qu'**au moins une des couches intérieures, notamment la couche de diffusion (3) et/ou la couche de base (2) du corps de contrôle (4) est ferromagnétique.

**Figur 1**

**Figur 2**

**Figur 3**

**Figur 4**

Figur 5

Figur 6

**IN DER BESCHREIBUNG AUFGEFÜHRTE DOKUMENTE**

**In der Beschreibung aufgeführte Patentdokumente**

- DE 102005046574 A1
- US 7259555 B2
- DE 4119903 A1
- EP 0100009 A1
- WO 8700293 A1
- DE 4433772 A1
- EP 1767932 A1
- WO 8705112 A1